# EUROPEAN PATENT SPECIFICATION

(11) **EP 0 723 856 B1**
(45) Date of publication and mention of the grant of the patent: **08.05.2002**
(21) Application number: 96100891.9
(22) Date of filing: 22.01.1996
(51) Int. Cl.: B29D 7/01, B29C 47/00

(54) **Plastic film particularly for pouch-like packages with improved tearability**
Kunststofffolie mit verbesserter Rissanfälligkeit besonders für Verpackungbeutel
Film plastique avec tendance à la déchirure améliorée particulièrement pour sachets d'emballage

(30) Priority: 25.01.1995 IT PD950023
(43) Date of publication of application: 31.07.1996
(73) Proprietor: BURGOPACK STAMPA, TRASFORMAZIONE, IMBALLAGGI S.p.A., I-36030 Lugo Di Vicenza, Vicenza (IT)
(72) Inventor: Visona, Sergio, I-36010 Chiuppano, Vicenza (IT)
(74) Representative: Modiano, Guido, Dr.-Ing.

(56) References cited:
- EP-A- 0 372 886
- US-A- 4 311 752
- US-A- 4 554 120
- US-A- 4 671 918
- US-A- 4 828 906
- US-A- 5 241 030
- US-A- 5 262 228

## Description

The present invention relates to a plastic film particularly but not exclusively for pouch-like packages with improved tearability.

It is known that in plastic pouch-like packages, particularly in hermetic packages, there is the problem of preparing them so that the user can easily tear them for opening, thus accessing their content.

A conventional method for solving the problem is to provide the pouches with a pre-cut, but this solution is adequate only in the case of soft and thin materials, while it is fully insufficient for thick and hard materials.

Despite the presence of the pre-cut, tearing does not proceed in a linear manner.

In other cases, an embossing is performed instead of the pre-cut, said embossing running longitudinally proximate to one or more sides of the pouch so as to score the package, allowing to start the tearing action.

However, this solution does not facilitate the propagation of the tear, which in this case, too, does not occur in a linear fashion.

In other embodiments, a laser scoring is provided which is adapted to weaken the material and allow opening by tearing.

US-A-4 671 918 discloses an apparatus and process for producing polyolefin film which comprises extruding linear low density polyolefin resins (LLDPE), as well as extruding HDPE, MDPE, and LDPE resins, to provide a film with a transverse stretch, through an extrusion mandrel with an increased die gap and a decreased land length within the die, and a relief area is formed within the die so as to provide an area wherein the melt can relax in order to relieve stresses formed within the polyolefin material. Examples are given of extruded resins having densities from 0.9288 to 0.9217 (g/cc).

EP-A-0 372 886 discloses a transversely tearable film and pouches made therefrom comprising a machine direction orientated linear low density polyethylene film, and provided with a slit or perforation intended as a device for starting a tear and for directing the tear in a preferred direction.

The principal aim of the present invention is to provide a plastic film for pouch-like packages that is intrinsically, in its very structure, preset for tearing with linear propagation.

Within the scope of this aim, a consequent primary object is to provide a plastic film that allows to produce pouches that can be torn along longitudinal and transverse lines and therefore in perpendicular directions.

Another important object is to provide pouch-like packages that do not need to be subjected to specific operations to prepare them for tearing.

Another important object is to provide a plastic film that maintains optimum heat-sealing and flexibility characteristics.

Another important object is to provide a plastic film that can be produced with conventional equipment and facilities.

In accordance with the invention, there is provided a plastic film, particularly for pouch-like packages with improved tearability, as defined in the appended claims.

The particular characteristics and advantages of the invention will become apparent from the detailed description of an embodiment thereof, given hereinafter by way of non-limitative example.

According to the invention, the plastic film particularly for pouch-like packages is constituted, for at least 90%, by a polyethylene resin of the group of linear polyethylenes, of the butene copolymer type, i.e., with an average density on the order of 0.93-0.935 and for the remaining percentage, another resin with a density on the order of 0.94-0.945.

The film is obtained by extrusion, by using per se known extrusion heads normally used in this field, providing a transverse stretch ratio at least equal to 2.

The stretch ratio is conveniently the ratio between the width of the resulting film and the circumference of the extrusion slit.

The resulting film is orientated both longitudinally and transversely, producing corresponding preferential tearability directions with a tearing action that proceeds in a linear manner, without changing direction, if it is produced in either of the two directions.

Of course, according to the above mentioned stretch ratio, if it is not possible to produce considerable film widths, it is necessary to reduce the dimensions of the extrusion head, particularly the circumference of the extrusion slit, in order to achieve a ratio of at least 2.

For an equal head diameter, instead, it is necessary to increase the width of the film to achieve the minimum necessary stretch ratio.

The orientation produced by the stretch ratio cannot however be too high, since one of its secondary effects is an increase in mechanical strength and in the heat-sealing temperature of the film, and this might be a problem for high-speed packaging machines.

The convenience of providing, in the packages, a small initial guiding slit on the edge, to further facilitate opening for the user, should also be noted.

In practice, it has been observed that the above described film has achieved the intended aim and objects.

Its use to produce easy-opening pouches/packages in fact allows to permanently solve the problem of package opening.

The structural features of the film cause it to be intrinsically preset for tearing along two perpendicular preferential directions without having to perform operations such as pre-cutting, laser scoring, embossing, etcetera.

It is simply preferable to provide a small edge slit in the pouch.

The invention thus conceived is susceptible of numerous modifications and variations, all of which are within the scope of the inventive concept.

All the details may furthermore be replaced with other technically equivalent elements.

In practice, the dimensions may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. Plastic film, comprising a linear polyethylene resin of average density that is extruded with a transverse stretch ratio of at least 2, said average density being on the order of 0.93-0.935, said linear polyethylene resin being present for at least 90%, and the film comprising for the remaining percentage at least one other resin with a density on the order of 0.94-0.945.

2. Film according to claim 1, **characterized in that** said linear polyethylene resin is of the butene copolymer type.

3. Film according to one or more of the preceding claims, **characterized in that** it is orientated both longitudinally and transversely.

4. Pouch/package produced with a plastic film according to one or more of the preceding claims, **characterized in that** it has at least one slit on the edge to guide tearing.

## Patentansprüche

1. Kunststofffilm, mit einem linearen Polyethylenharz mit einer mittleren Dichte, das mit einem Querreckungsverhältnis von wenigstens 2 extrudiert ist, wobei die mittlere Dichte in der Größenordnung von 0,93 - 0,935 ist, wobei das lineare Polyethylenharz wenigstens zu 90 % enthalten ist und der Film für die übrigen Prozente wenigstens ein anderes Harz mit einer Dichte in der Größenordnung von 0,94 - 0,945 beinhaltet.

2. Film nach Anspruch 1, **dadurch gekennzeichnet, dass** das lineare Polyethylenharz vom Butenkopolymertyp ist.

3. Film nach einem oder mehreren der vorangegangenen Ansprüche, **dadurch gekennzeichnet, dass** er sowohl longitudinal als auch transversal orientiert ist.

4. Beutel/Verpackung, hergestellt aus einem Kunststofffilm nach einem oder mehreren der vorhergehenden Ansprüche, **dadurch gekennzeichnet, dass** er/sie wenigstens einen Schlitz an dem Rand für ein geführtes Aufreissen aufweist.

## Revendications

1. Film plastique comprenant une résine en polyéthylène linéaire de densité moyenne, obtenue par extrusion avec un taux d'étirement transversal d'au moins 2, ladite densité moyenne étant de l'ordre de 0,93 à 0,935, ladite résine de polyéthylène linéaire étant présente pour au moins 90 %, et le film comprenant, pour le pourcentage résiduel, au moins une autre résine d'une densité de l'ordre de 0,94 à 0,945.

2. Film selon la revendication 1, **caractérisé en ce que** ladite résine de polyéthylène linéaire est du type copolymère de butène.

3. Film selon une ou plusieurs des revendications précédentes, **caractérisé en ce qu'**il est orienté à la fois longitudinalement et transversalement.

4. Enveloppe/emballage, produit(e) avec un film en matière plastique selon une ou plusieurs des revendications précédentes, **caractérisé en ce qu'**il a au moins une fente sur le bord, afin de guider le déchirement.
